# EUROPEAN PATENT SPECIFICATION

(11) **EP 1 019 991 B1**
(45) Date of publication and mention of the grant of the patent: **24.07.2002**
(21) Application number: 98939303.8
(22) Date of filing: 12.08.1998
(51) Int. Cl.: H04B 10/17, H04B 10/207, H04J 14/02

(54) **OPTICAL AMPLIFIER APPARATUS**
OPTISCHE VERSTÄRKERVORRICHTUNG
DISPOSITIF D'AMPLIFICATEUR OPTIQUE

(30) Priority: 29.09.1997 FR 9712083
(43) Date of publication of application: 19.07.2000
(73) Proprietor: CORNING INCORPORATED, Corning, N.Y. 14831 (US)
(72) Inventor: JACOB, David, F-77210 Avon (FR); PRASSAS, Michel, F-77870 Vulaines sur Seine (FR)
(74) Representative: Boon, Graham Anthony
(86) International application number: US9816558
(87) International publication number: WO9917410

(56) References cited:
- JP-A- 8 054 580
- US-A- 5 161 044
- US-A- 5 337 175
- US-A- 5 459 328
- WAY W I ET AL: "SIMULTANEOUS DISTRIBUTION OF MULTICHANNEL ANALOG AND DIGITAL VIDEO CHANNELS TO MULTIPLE TERMINALS USING HIGH-DENSITY WDM AND A BROAD- BAND IN-LINE ERBIUM-DOPED FIBER AMPLIFIER" IEEE PHOTONICS TECHNOLOGY LETTERS, vol. 2, no. 9, 1 September 1990 (1990-09-01), pages 665-668, XP000170561
- PATENT ABSTRACTS OF JAPAN vol. 012, no. 322 (E-652), 31 August 1988 (1988-08-31) & JP 63 087033 A (TOSHIBA CORP), 18 April 1988 (1988-04-18)

## Description

The present invention relates to a new type of optical amplifier apparatus especially, but not exclusively, optical amplifier apparatus intended for use in an optical fiber networks.

Optical fiber is penetrating rapidly in subscriber access networks for distribution of CATV (cable television) services. Today's CATV headend stations feed distributive services to large numbers of subscribers (> 1000) in networks with abundant splitting in the fiber part as well as in the coaxial part. The present demand for interactive services, like teleworking and high quality videotelephony, is increasing but it requires a high-bandwidth and bi-directional link between servers and customers. To implement such interactive services in CATV networks, it is necessary to develop high definition wave division multiplexing (HDWDM) techniques and devices. One of these essential devices is a bi-directional multiwavelength optical amplifier which has to compensate for the propagation and the splitting losses along the link for both upstream and downstream signals. No such device is currently available.

IEEE Photonics Technology Letters, Vol 2, No, 9, 1 September 1990, pages 665-668, Way W.I. et al, "Simultaneous Distribution of Multichannel Analog and Digital Video Channels to Multiple Terminals using High-Density WDM and a BroadBand In-Line Erbium-Doped Fiber Amplifier", describes an optical amplifier apparatus particularly for use in networks distributing signals via optical fibers, the apparatus amplifying digital and analog signals.

The present invention provides a new optical amplifier architecture having two parallel optical branches, one for amplifying digital signals and the other for amplifying analogue signals. These optical branches are parallel in the sense that they are connected in parallel such that certain signals pass through one of the branches while others pass, possibly simultaneously, through the other. Preferred embodiments of this optical amplifier apparatus enable simultaneous amplification of an analogue CATV signal and a plurality of multiplexed bi-directional digital signals, compensating the propagation and splitting losses along the link for both upstream and downstream signals.

It is particularly preferred that the optical amplifier apparatus of the present invention should make use of erbium doped fiber amplifier (EDFA) elements. Typically, the wavelengths handled by the digital path in the optical amplifier apparatus will be in the shorter wavelength region (e.g. 1530-1545ÿnm) of the EDFA gain spectrum whereas the wavelengths handled by the analogue path of the optical amplifier will be in the longer wavelength region (1550-1560 nm). The frequency modulation of the analogue signal often results in a frequency variation of the transmitting laser. The use of the 1550-1560 nm band for the amplification of the analogue signal enables distortion of the analogue signal, due to this frequency variation of the transmitter laser, to be reduced thanks to the fact that the gain slope of the EDFA element is gentler in this part of the spectrum.

In one embodiment of the invention. the optical branch handling the digital signals has first and second amplifying portions (advantageously, embodied as respective EDFA coils) and a gain flattening filter arranged between these two amplifying portions. With this arrangement. the position of the gain flattening filter can be selected such that the best compromise can be reached between low noise and optimal output power for both upstream and downstream channels.

It is also preferred that two lasers should be used to drive the amplifying means in the parallel analogue and digital paths. In this way, the gain of each path can be controlled independently of the other. It is particularly preferred that each of the lasers should drive a respective amplifying means in the digital path whereas only one of the lasers drives the amplifying means in the analogue path.

Preferably the parallel digital and analogue paths are joined together at their ends by wavelength division multiplexer/demultiplexer devices. Not only do such devices enable the digital and analogue signals to be separated and recombined as desired, but also they reduce multiple path interference induced cross-talk and improve the noise figures of both analogue and digital sections by filtering the amplified spontaneous emission (ASE). It is also desirable that an optical isolator be included in the analogue branch, when the latter handles unidirectional signals.

In order to promote compactness of the overall apparatus, it can be useful to integrate with the optical amplifier apparatus of the present invention the first signal splitter of the distributive network.

Further features and advantages of the present invention will become apparent from the following description of preferred embodiments thereof, given by way of example, and illustrated in the accompanying drawings, in which:
Fig. 1 shows the general construction of a first embodiment of optical amplifier apparatus according to the present invention;
Fig. 2 shows the general construction of a second embodiment of optical amplifier apparatus according to the present invention; and
Fig. 3 shows the general construction of a third embodiment of optical amplifier apparatus according to the present invention.

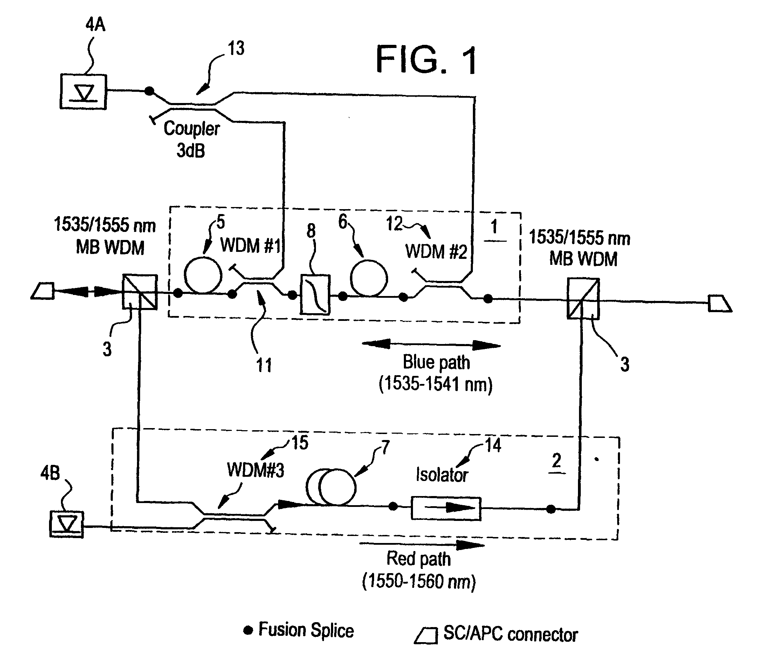

As illustrated in figure 1, the optical amplifier apparatus of the present invention includes first and second parallel optical branches 1 and 2. The first parallel branch, 1, is adapted to amplify a plurality of multiplexed uni- or, preferably, bi-directional digital signals. whereas the second optical path is adapted to amplify a unidirectional analogue signal, particularly, such a signal of relatively broad band.

The parallel optical branches are joined together at their ends by wavelength division multiplexing/demultiplexing (WDM) devices 3 and are driven by first and second laser diodes 4A and 4B. In the present example, the laser diodes 4A and 4B operate at 980 nm and have an output power of 120 mW; however, as would be well understood by one skilled in the art, different pump laser wavelengths are suitable depending upon the active dopant in the amplifying medium. The WDM devices 3 are band splitters of medium bandwidth and serve to separate and recombine the analogue channel and the digital channels. They also reduce cross-talk induced by multiple path interference (MPI) and to improve the noise figures of both sections by filtering the amplified spontaneous emission. Such devices are suitably fiber, grating, thin film or other type WDM's known to those in the art.

In this embodiment of the invention. the parallel branches of the amplifier apparatus make use of erbium-doped fiber amplifiers 5, 6 and 7. The first parallel branch 1 operates in the shorter wavelength (blue) band (1530-1545 nm) of the gain spectrum of erbium whereas the second parallel branch 2 operates in the longer wavelength (red) band (1550-1560 nm) of the erbium gain spectrum. The use of the longer wavelength band enables a reduction in the analogue signal distortion caused by the frequency variation of the transmitter laser (when the latter is internally modulated), as explained above.

The first optical branch 1 is preferably bi-directional (that is, there is no optical isolator). This optical branch 1 is used to amplify at the same time upstream and downstream digital channels and, with a channel spacing of 0.8 nm (100 GHz) between two adjacent multiplexed upstream and downstream channels, up to 8 digital channels (e.g. 4 upstream, 4 downstream) can be accommodated in the 1535-1541 nm window. The wavelength interleaving of the upstream and downstream signals makes it possible to reduce possible four-wave mixing effects between co-propagating signals, while only using a small spectral range of the gain curve.

Preferably, amplification is achieved in the first optical branch using two amplifying sections (here EDFA coils 5 and 6) with a gain flattening filter 8 disposed between them. The gain flattening filter serves to reduce the gain ripple between the different digital channels. By using two amplifying sections 5 and 6, an optimum position for the gain flattening filter 8 can be found, which enables the achievement of a suitable compromise between noise performance and optimum output power for both upstream and downstream channels. In the present example the two amplifying sections 5 and 6 are formed of a first EDFA coil 5.5 m long and a second EDFA coil 12m long, respectively. It will be appreciated that a dual coil arrangement alternatively provides for different compositions of the coils and/or different pump wavelengths directed to either or both of the coils.

In the present embodiment, the pump laser diode 4A drives the first and second amplifying sections 5 and 6 of the first optical path via a coupler 13 and respective wave division multiplexing (WDM) devices 11 and 12. Coupler 13 can be a 3dB coupler or a directional coupler with any desired splitting ratio depending upon the level of inversion sought in the coils 5, 6.

The second optical branch 2 is unidirectional and, when this optical amplifier apparatus is used in a network distributing CATV and digital services, serves to amplify the analogue CATV signal. This branch includes a single amplifying section, embodied in this example as an EDFA coil of 15.5 m in length. An optical isolator 14 is included in this second optical branch 2 so as to reduce back reflection effects. The pump laser 4B drives the amplification in second optical branch 2 via a WDM coupling device 15.

The dual pump configuration described above is advantageous since the gain or output power of each of the parallel branches can be controlled independently of that or those of the other branch. Thus, in a CATV application, the output power of the CATV signal could be changed, by changing the excitation current of the pump laser 4B, without altering the output power of the digital channels. Similarly, if it is desired to change the output power of the digital branch alone, the excitation current of pump laser 4A alone could be changed.

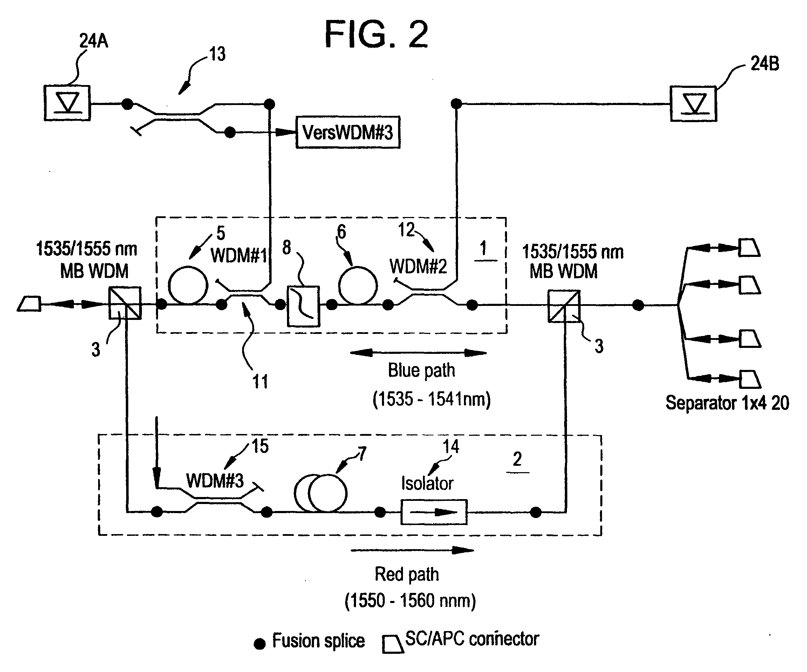

A second embodiment of optical amplifier apparatus according to the present invention is illustrated in Fig. 2. The second embodiment has many elements similar to those of the first embodiment and, accordingly, the same reference numerals have been used as appropriate.

As illustrated in Fig. 2, the optical amplifier apparatus of the second embodiment integrates the first splitter 20 of the distributive network. In this example, the integrated splitter 20 is a four-way splitter. Additionally, the drive arrangement of the second embodiment is different from that of the first embodiment. It will be seen that although two laser diodes 24A, 24B are still used to drive the parallel optical paths, the arrangement of these laser diodes has been changed from the embodiment of Fig. 1. In particular, in the present embodiment, the two co-propagating pump lasers 24A and 24B are coupled to the two amplifying sections of the first parallel path 1 via respective WDM coupling devices 11 and 12. The pump laser 24A is coupled to the first WDM coupling device 11 via a 3 dB coupler 23 which splits the laser power provided by the drive laser 24A such that substantially half of the output power therefrom is fed to the second parallel optical branch 2 via a further WDM coupling device 15.

With the pump arrangement of Fig. 2, the gain or output power of each of the parallel optical branches can also be controlled independently of that or those of the other branch. If it is desired to change the output power of optical branch 2 then the power of laser diode 24A is altered and a compensating change is made to the output power of laser diode 24B. On the other hand, if it is desired to change the output power of optical branch 1, then the output power of laser diode 24B alone is adjusted.

The performance of the optical amplifier apparatus illustrated in figure 2 will now be illustrated by reference to the results of certain experiments which have been performed. All of the described experiments were performed at ambient temperature and at constant pump power of 130 mW at 980nm for the first pump laser 24A and a pump power of 80 mW at 980nm for the second pump laser 24B.

### Measurements for the Analogue Branch

The noise figure and output power of the analogue amplifying branch 2 were investigated by scanning the wavelength of the input signal from 1550 nm to 1560 nm (with a step of 1 nm). For each wavelength, the input power was successively set to -5dBm, 0 dBm and +5dBm, representative of possible operating points of the amplifier. Under these conditions, the noise figure and output power were as indicated in Table 1 below.

**Table I**

| | Pₒᵤₜ (dBm) (*)λ_{CATV} = [1550-1560] | NF (dB) (*)λ_{CATV} = [1550-1560] | Gain (dB) (*) λ_{CATV} = [1550-1560] |
|---|---|---|---|
| Pᵢₙ = -5 dBm | 6.5 dBm<Pₒᵤₜ <6.6 dBm | 4.3 dB <NF<4.6 dB | 11.5 dB< G <11.6 dB |
| Pᵢₙ = 0 dBm | 6.8 dBm<Pₒᵤₜ <6.9 dBm | 4.8 dB <NF<5.2 dB | 6.8 dB< G <6.9 dB |
| Pᵢₙ = +5 dBm | 7.1 dBm<Pₒᵤₜ <7.2 dBm | 5.7 dB <NF<6.0 dB | 2.1 dB< G <2.2 dB |

| | | | |
|---|---|---|---|
| (*) for the highest loss output port | | | |

The gain slope of the analogue amplifying branch was investigated using two signals, one signal was used to saturate the gain at the wavelength of the CATV signal whereas the second was used as a weak probe signal to monitor the gain around the CATV wavelength. The saturating beam was successively set to 1550, 1555 and 1560 nm with saturating input power set to -5dBm, 0 dBm and +5dBm for each wavelength. For each of these saturation conditions, the probe beam wavelength was scanned around the CATV wavelength with an input power of -35 dBm and the local gain slope was evaluated in 1 nm widths. The results are indicated in Table 2 below.

**Table 2**

| | Gain slope ΔG/Δλ (dB/nm) for λ_{CATV} = [1550-1560] |
|---|---|
| Pᵢₙ = -5 dBm | 0.1 < ΔG/Δλ < 0.25 |
| Pᵢₙ = 0 dBm | 0.1 < ΔG/Δλ < 0.25 |
| Pᵢₙ = +5 dBm | 0.1 < ΔG/Δλ < 0.25 |

It is interesting to note from table 2 that the gain slope in each case is below 0.25 dB/nm, which is typical of Type II erbium-doped fibers. This architecture is thus suited to use in CATV applications, the maximum tolerable value of gain slope being 0.25 dB/nm in such applications.

### Measurements for the Digital Branch

With respect to the downstream direction, the noise figure, gain and gain flatness were investigated in three steps, using three lasers. For all the measurements, an upstream saturating signal at 1538 nm (mean wavelength of the digital channels) with an optical input power of -13 dBm (maximum total upstream power carried by the 4 upstream channels at the entrance of the 1x4 splitter) was injected in the amplifier through one of the 1x4 output connectors. First, the downstream gain and noise figure were measured with a downstream signal at 1538 nm for various saturation input power values: -7, -10, -20, -30 dBm (see Table 3). Secondly, a -13 dBm downstream probe signal at 1535 nm was added at the input port of the amplifier and the 1538 nm signal was adjusted to -8.2 dBm so that the total downstream input power remained constant at -7 dBm. Finally, the signal at 1535 nm was replaced by a -13 dBm signal at 1541 nm. For these operating conditions, it can be postulated that the average inversion along the amplifier will lead to a monotonic decrease of the gain from 1535 to almost 1541 nm, even in presence of the gain flattening filter. Then the gain ripple is simply given by the gain difference between these two wavelengths (see Table 4).

**Table 3**

| | Net Gain (dB) | NF (dB) |
|---|---|---|
| Pᵢₙ = -7 dBm | 16.3 | 5.6 |
| Pᵢₙ = -10 dBm | 18.9 | 5.8 |
| Pᵢₙ = -20 dBm | 24.7 | 5.4 |
| Pᵢₙ = -30 dBm | 28.4 | 5.3 |

**Table 4**

| Gₘₐₓ(@ 1535 nm) | Gₘᵢₙ(@ 1541 nm) | ΔG= Gₘₐₓ - Gₘᵢₙ | NF λ = [1535-1541] |
|---|---|---|---|
| 17.3 dB | 16.2 dB | 1.1 dB | 5.9 dB <NF< 6.0 dB |

With respect to the upstream direction, measurements were made in the same way as for the downstream direction. Thus, for all the measurements, a downstream saturating signal at 1538 nm with an optical input power of -7 dBm was injected in the amplifier through the input connector. First, the upstream gain and noise figure were measured with an upstream signal at 1538 nm for various saturation input power values: -13, -20, -30 dBm (see Table 5). Secondly, a -19 dBm downstream probe signal at 1535 nm was added at one output port of the amplifier and the 1538 nm signal was adjusted to -14.25 dBm so that the total upstream input power remained-constant at -13 dBm. Finally, the signal at 1535nm was replaced by a -19 dBm signal at 1541 nm. The gain ripple is given as previously (see Table 6).

**Table 5**

| | Net Gain (dB) | NF (dB)(*) |
|---|---|---|
| Pᵢₙ = -13 dBm | 16.1 | 7 |
| Pᵢₙ = -20 dBm | 16.5 | 6.7 |
| Pᵢₙ = -30 dBm | 20.5 | 2.9 |

**Table 6**

| Gₘₐₓ (@ 1535 nm) | Gₘᵢₙ (@ 1541 nm) | ΔG= Gₘₐₓ - Gₘᵢₙ | NF(*) λ =1535-1541 |
|---|---|---|---|
| 18.5 dB | 16.1 dB | 2.4 dB | 6.5dB <NF< 9.4dB |

| | | | |
|---|---|---|---|
| (*) In Tables 5 and 6, the values of the noise figures NF do not take into account the losses (of the order of 7 dB) associated with the 1x4 splitter at the output of the amplifier. | | | |

It will be seen from the above-described experimental results that the optical amplifier apparatus of the present invention has performance characteristics which are highly suitable for an application in a network distributing CATV and multiplexed digital signals.

Although the present invention has been described with reference to two specific embodiments thereof, the invention is not limited to the detailed implementations of these two embodiments. On the contrary, numerous modifications and adaptations of the apparatus can be made. For example, the quoted operating wavelengths, powers and excitation currents of the laser diodes are merely illustrative, other values are possible. Similarly, the quoted lengths of the various EDFA elements are merely illustrative, the appropriate lengths will require adjustment depending upon the application and the desired performance.

Similarly, drive arrangements other than those illustrated in Figs. 1 and 2 are possible. For example, in the embodiment of Fig. 1, instead of using a single drive laser 4A and a 3dB, 1x2 coupler 13 to drive the two amplifying sections 5 and 6 of the digital branch, a pair of laser diodes and a 2x2 coupler could be used. In this way, by providing redundancy the digital amplifier branch is protected against possible breakdown (in the event of breakdown of one of the drive lasers, amplification will still take place, with losses of only 3 dB).

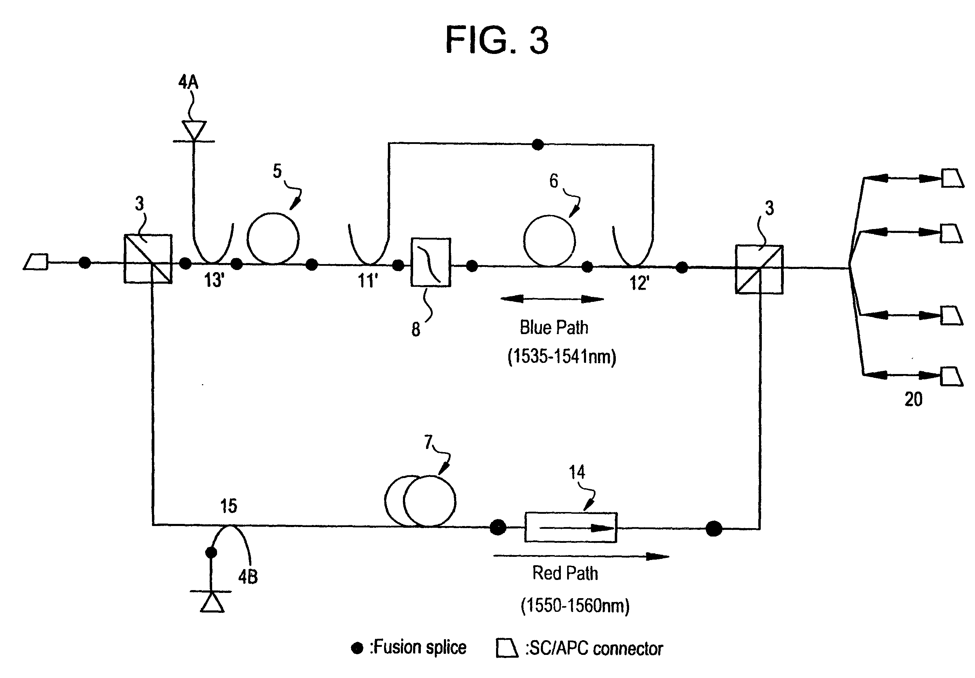

Alternatively, Fig 3. Shows an embodiment of the invention having a pumping scheme different from that of Figures 1 and 2. First pump laser 4A is coupled to amplifier means 5 by WDM coupler 13' such that the coil 5 is pumped in the forward direction (forward direction here meaning from the viewer's left to right). Remnant pump power from coil 5 is then directed to bypass filter 8 via WDM coupler 11' along bypass route 22, and is directed into coil 6 in the reverse pumping direction (right to left) via WDM coupler 12'. In an aspect of this embodiment, the remnant pump output power portion direct to coil 6 is preferably in the range of 50-90% of the pump output power portion used to pump coil 5. More preferably, the remnant pump output power portion direct to coil 6 is in the range of 75-85% of the pump output power portion used to pump coil 5. Most preferably it is about 80%.

## Claims

1. Optical amplifier apparatus particularly for use in networks distributing signals via optical fibers, the apparatus amplifying digital and analog signals and being **characterized by** comprising:
first and second parallel optical branches (1, 2), the first optical branch (1) including optical amplifier means (5, 6) for amplifying digital signals and the second optical branch including optical amplifier means (7) for amplifying analogue signals.

2. Optical amplifier apparatus according to claim 1, **characterized in that** the optical amplifier means (5, 6) of the first optical branch (1) is adapted to amplify bi-directional digital signals and the optical amplifier means (7) of the second optical branch (2) is adapted to amplify unidirectional analogue signals.

3. Optical amplifier apparatus according to claim 1, **characterized in that** the optical amplifier means (5, 6) of the first optical branch (1) is adapted to amplify wavelength division multiplexed digital signals.

4. Optical amplifier apparatus according to claim 1, **characterized in that** the optical amplifier means (5, 6) of the first optical branch (1) comprises first (5, 11) and second (6, 12) amplifying portions and a gain flattening filter (8) arranged between said first and second amplifying portions.

5. Optical amplifier apparatus according to claim 1, **characterized in that** it comprises first and second pump lasers (4A, 4B) coupled to the first and second optical branches (1, 2) such that the gain or output power of each of the parallel optical branches can be controlled independently of that or those of the other optical branch.

6. Optical amplifier apparatus according to claim 5, **characterized in that** the first pump laser (24A) is coupled to the second optical branch (2) and to the first amplifying means (5) of the first optical branch (1) whereas the second pump (24B) laser is coupled to the second amplifying means (6) of the first optical branch (1)

7. Optical amplifier apparatus according to claim 1, **characterized in that** the amplifying means or portions are constituted by erbium-doped fiber amplifiers (EDFA), the first optical branch (1) uses a shorter wavelength (blue) region of the EDFA gain spectrum and the second optical branch (2) uses a longer wavelength (red) region of the EDFA gain spectrum.

8. Optical amplifier apparatus according to claim 7, **characterized in that** said shorter wavelength region of the EDFA spectrum concerns the wavelength range 1530-1545 nm, and the longer wavelength region of the EDFA gain spectrum concerns the wavelength range 1550-1560 nm.

9. Optical amplifier apparatus according to claim 1, **characterized in that** the ends of the first and second parallel optical branches (1, 2) are joined together via wavelength division multiplexer (WDM) devices (3).

10. Optical amplifier apparatus according to claim 1, **characterized in that** the second optical branch (2) includes an optical isolator (14).

11. Optical amplifier apparatus according to claim 1, **characterized in that** it further comprises a splitter (20) connected to an output of the apparatus.

12. Optical amplifier apparatus according to claim 1, **characterized in that** the second optical branch (2) is adapted to amplify a CATV signal.

13. Optical amplifier apparatus according to claim 5, **characterized in that** the amplifier means (5,6) are both counter-pumped by an output power portion of the first pump laser (4A).

14. Optical amplifier apparatus according to claim 5, **characterized in that** the amplifier means (5) is forward-pumped by an output power portion of the first pump laser (4A) and amplifier means (6) is counter-pumped by a remnant output power portion of the first pump laser (4A).

15. Optical amplifier apparatus according to claim 14, **characterized in that** the remnant output power portion of the first pump laser (4A) is about 50-90% of the output power portion of the first pump laser which pumps amplifier means (5).

16. Optical amplifier apparatus according to claim 14, **characterized in that** the remnant output power portion of the first pump laser (4A) is about 75-85% of the output power portion of the first pump laser which pumps amplifier means (5).

## Patentansprüche

1. Optische Verstärkervorrichtung, insbesondere für die Verwendung in Netzwerken, welche Signale über optische Fasern verteilen, wobei die Vorrichtung digitale und analoge Signale verstärkt, **gekennzeichnet durch**:
erste und zweite parallele optische Zweige (1,2), wobei der erste optische Zweig (1) eine optische Verstärkereinrichtung (5,6) zum Verstärken digitaler Signale und der zweite optische Zweig (2) eine optische Verstärkereinrichtung (7) zum Verstärken analoger Signale beinhaltet.

2. Optische Verstärkervorrichtung nach Anspruch 1, **dadurch gekennzeichnet, dass** die optische Verstärkereinrichtung (5,6) des ersten Zweiges (1) geeignet ist, bidirektional digitale Signale zu verstärken und die optische Verstärkereinrichtung (7) des zweiten optischen Zweiges (2) geeignet ist, einseitig gerichtete analoge Signale zu verstärken.

3. Optische Verstärkervorrichtung nach Anspruch 1, **dadurch gekennzeichnet, dass** die optische Verstärkereinrichtung (5,6) des ersten Zweiges (1) geeignet ist, digitale Wellenlängenmultiplex-Signale zu verstärken.

4. Optische Verstärkervorrichtung nach Anspruch 1, **dadurch gekennzeichnet, dass** die optische Verstärkereinrichtung (5,6) des ersten Zweiges (1) erste (5, 11) und zweite (6, 12) verstärkende Teile und ein die Verstärkung abflachendes Filter (8) aufweist, welches zwischen dem ersten und zweiten verstärkendem Teil angeordnet ist.

5. Optische Verstärkervorrichtung nach Anspruch 1, **dadurch gekennzeichnet, dass** sie erste und zweite Pumplaser (4A, 4B) beinhaltet, welche mit den ersten und zweiten Zweigen (1, 2) in der Weise verbunden sind, dass die Verstärkung oder die Ausgangsleistung eines jeden der parallelen optischen Zweige unabhängig von dieser oder von denen des anderen optischen Zweiges gesteuert werden kann.

6. Optische Verstärkervorrichtung nach Anspruch 5, **dadurch gekennzeichnet, dass** der erste Pumplaser (24A) mit dem zweiten Zweig (2) und der ersten verstärkenden Einrichtung (5) des ersten Zweiges (1) verbunden ist, wohingegen der zweite Pumplaser (24B) mit der zweiten verstärkenden Einrichtung (6) des ersten Zweiges (1) verbunden ist.

7. Optische Verstärkervorrichtung nach Anspruch 1, **dadurch gekennzeichnet, dass** die verstärkende Einrichtung oder Teile durch Erbium-dotierte Faserverstärker (EDFA) gebildet werden, wobei der erste optische Zweig (1) einen kürzeren Wellenlängenbereich (blau) des EDFA-Verstärkungsspektrums und der zweite optische Zweig (2) einen längeren Wellenlängenbereich (rot) des EDFA-Verstärkungsspektrums nutzt.

8. Optische Verstärkervorrichtung nach Anspruch 7, **dadurch gekennzeichnet, dass** der kürzere Wellenlängenbereich des EDFA-Verstärkungsspektrums den Wellenlängenbereich 1530 - 1545 nm betrifft, und der längere Wellenlängenbereich des EDFA-Verstärkungsspektrums den Wellenlängenbereich 1550 - 1560 nm betrifft.

9. Optische Verstärkervorrichtung nach Anspruch 1, **dadurch gekennzeichnet, dass** die Enden der ersten und zweiten parallelen optischen Zweige (1,2) über Wellenlängenmultiplex (WDM)-Anordnungen (3) miteinander verbunden sind.

10. Optische Verstärkervorrichtung nach Anspruch 1, **dadurch gekennzeichnet, dass** der zweite optische Zweig (2) einen optischen Isolator (14) beinhaltet.

11. Optische Verstärkervorrichtung nach Anspruch 1, **dadurch gekennzeichnet, dass** sie ferner einen Teiler (20) aufweist, der mit einem Ausgang der Vorrichtung verbunden ist.

12. Optische Verstärkervorrichtung nach Anspruch 1, **dadurch gekennzeichnet, dass** der zweite optische Zweig (2) geeignet ist, ein CATV-Signal zu verstärken.

13. Optische Verstärkervorrichtung nach Anspruch 5, **dadurch gekennzeichnet, dass** beide Verstärkereinrichtungen (5,6) entgegengesetzt gerichtet durch einen Teil der Ausgangsleistung des ersten Pumplasers (4a) gepumpt werden.

14. Optische Verstärkervorrichtung nach Anspruch 5, **dadurch gekennzeichnet, dass** die Verstärkereinrichtung (5) durch einen Teil der Ausgangsleistung des ersten Pumplasers (4a) vorwärts gerichtet gepumpt wird und die Verstärkereinrichtung (6) durch einen Teil der restlichen Ausgangsleistung des ersten Pumplasers (4a) entgegengesetzt gerichtet gepumpt wird.

15. Optische Verstarkervorrichtung nach Anspruch 14, **dadurch gekennzeichnet, dass** die restliche Ausgangsleistung des ersten Pumplasers 4a) ungefähr 50-90% des Ausgangsleistungsteils des ersten Pumplasers beträgt, welcher die Verstärkereinrichtung (5) pumpt.

16. Optische Verstärkervorrichtung nach. Anspruch 14, **dadurch gekennzeichnet, dass** der restliche Ausgangsleistungsteil des ersten Pumplasers (4a) ungefähr 75-85% des Ausgangsleistungsteils des ersten Pumplasers beträgt, welcher die Verstärkereinrichtung (5) pumpt.

## Revendications

1. Appareil amplificateur optique destiné en particulier à être utilisé dans des réseaux diffusant des signaux par des fibres optiques, l'appareil amplifiant des signaux numériques et des signaux analogiques et étant **caractérisé en ce qu'**il comprend :
une première et une deuxième branches optiques parallèles (1, 2), la première branche optique (1) comportant des moyens d'amplification optiques (5, 6) pour amplifier des signaux numériques et la deuxième branche optique comportant des moyens d'amplification optiques (7) pour amplifier des signaux analogiques.

2. Appareil amplificateur optique selon la revendication 1, **caractérisé en ce que** le moyen d'amplification optique (5, 6) de la première branche optique (1) est adapté à amplifier des signaux numériques bidirectionnels et **en ce que** le moyen d'amplification optique (7) de la deuxième branche optique (2) est adapté à amplifier des signaux analogiques unidirectionnels.

3. Appareil amplificateur optique selon la revendication 1, **caractérisé en ce que** le moyen d'amplification optique (5, 6) de la première branche optique (1) est adapté à amplifier des signaux numériques multiplexés en longueur d'onde.

4. Appareil amplificateur optique selon la revendication 1, **caractérisé en ce que** le moyen d'amplification optique (5, 6) de la première branche optique (1) comprend une première (6, 12) et une deuxième (6, 12) portions amplificatrices et un filtre aplatisseur de gain (8) monté entre lesdites première et deuxième portions amplificatrices.

5. Appareil amplificateur optique selon la revendication 1, **caractérisé en ce qu'**il comprend un premier et un deuxième lasers de pompage (4A, 4B) couplés aux première et deuxième branches optiques (1, 2) de telle manière que le gain ou la puissance de sortie de chacune des branches optiques parallèles puisse être réglé indépendamment de celui ou de ceux de l'autre branche optique.

6. Appareil amplificateur optique selon la revendication 1, **caractérisé en ce que** le premier laser de pompage (24A) est couplé à la deuxième branche optique (2) et au premier moyen d'amplification (5) de la première branche optique (1) tandis que le deuxième laser de pompage (24B) est couplé au deuxième moyen d'amplification (6) de la première branche optique (1).

7. Appareil amplificateur optique selon la revendication 1, **caractérisé en ce que** les moyens d'amplification ou des portions desdits moyens d'amplification sont constitués par des amplificateurs à fibre dopée à l'erbium (AFDE), **en ce que** la première branche optique (1) utilise une région de longueur d'onde relativement faible (bleu) du spectre de gain des AFDE et **en ce que** la deuxième branche optique (2) utilise une région de longueur d'onde relativement grande (rouge) du spectre de gain des AFDE.

8. Appareil amplificateur optique selon la revendication 7, **caractérisé en ce que** ladite région de faible longueur d'onde du spectre de gain des AFDE concerne le domaine de longueurs d'onde de 1530 à 1545 nm, et **en ce que** la région de grande longueur d'onde du spectre de gain des AFDE concerne le domaine de longueurs d'onde de 1550 à 1560 nm.

9. Appareil amplificateur optique selon la revendication 1, **caractérisé en ce que** les extrémités des première et deuxième branches optiques parallèles (1, 2) sont réunies entre elles par des dispositifs de multiplexage en longueur d'onde (MRL) (3).

10. Appareil amplificateur optique selon la revendication 1, **caractérisé en ce que** la deuxième branche optique (2) comporte un isolateur optique (14).

11. Appareil amplificateur optique selon la revendication 1, **caractérisé en ce qu'**il comprend en outre un répartiteur (20) relié à une sortie de l'appareil.

12. Appareil amplificateur optique selon la revendication 1, **caractérisé en ce que** la deuxième branche optique (2) est adaptée à amplifier un signal de télévision par câble.

13. Appareil amplificateur optique selon la revendication 5, **caractérisé en ce que** les moyens d'amplification (5, 6) sont tous deux pompés par l'aval par une portion de la puissance de sortie du premier laser de pompage (4A).

14. Appareil amplificateur optique selon la revendication 5, **caractérisé en ce que** le moyen d'amplification (5) est pompé par l'amont par une portion de la puissance de sortie du premier laser de pompage (4A) et **en ce que** le moyen d'amplification (6) est pompé par l'aval par une portion restante de la puissance de sortie du premier laser de pompage (4A).

15. Appareil amplificateur optique selon la revendication 14, **caractérisé en ce que en ce que** la portion de puissance de sortie restante du premier laser de pompage (4A) est de 50 à 90 % de la portion de puissance de sortie du premier laser de pompage qui pompe le moyen d'amplification (5).

16. Appareil amplificateur optique selon la revendication 14, **caractérisé en ce que** la portion de puissance de sortie restante du premier laser de pompage (4A) est d'environ 75 à 85 % de la portion de puissance de sortie du premier laser de pompage qui pompe le moyen d'amplification (5).
